# EUROPEAN PATENT APPLICATION

(11) **EP 1 162 416 A1**
(43) Date of publication of application: **12.12.2001**
(21) Application number: 00304725.5
(22) Date of filing: 05.06.2000
(51) Int. Cl.: F25B 41/04, F16K 31/08, F16K 31/53

(54) **Mechanism for actuating a rotary valve**

(71) Applicant: Fuji Injector Corporation, Kanagawa (JP)
(72) Inventor: Toyama, Isamu, Fuji-shi, Shizuoka-ken (JP)
(74) Representative: Ben-Nathan, Laurence Albert

(57) **Abstract**

A mechanism for actuating a rotary valve (20) in which a motor rotation shaft (30) makes a plurality of rotations so that the rotary valve (1) is rotated at a required angle of rotation in accordance with the number of rotations of the motor rotation shaft (30), and in which the angle of rotation of the rotary valve is set to a constant speed reduction ratio through reduction of rotating speed of the motor rotation shaft by a reduction gear mechanism (3), wherein a driving element (6A) fabricated of a permanent magnet is disposed at one end of the motor shaft and a driven element (6B) fabricated of a magnetic body is disposed at one end of a gear train shaft (32) on an input side of the reduction gear mechanism so that rotation of the permanent magnet (driving element) rotated by the motor is transmitted to the magnetic body by magnetic force and rotation of the magnetic body (driven element) is transmitted to both the gear reduction mechanism (3) and the rotary valve (20).

## Description

### BACKGROUND OF THE INVENTION

### 1. Field of the Invention

This invention relates to a mechanism for actuating a rotary valve and more particularly to a rotary valve actuating mechanism used for controlling the stream of a coolant of an air-conditioner as a typical example.

### 2. Related Art

The cooling and warming operation modes of an air-conditioner are designed to be switched from one to the other and vice versa by switching the direction of circulation of the coolant between an indoor machine and an outer machine. An air-conditioner of this type is provided with a rotary valve called "four-way valve" as means for controlling the stream of the coolant.

Japanese Unexamined Patent Publication (Kokai) Nos. Hei 8-152075 and 8-128553 and Japanese Unexamined Utility Model Publication (Kokai) No. Hei 3-57571 disclose air-conditioners in which a motor is employed as the driving source of the rotary valve and the motor rotation shaft is caused to make a plurality of rotations and rotation of the motor rotation shaft is reduced to a constant speed reduction ratio by a reduction gear mechanism, thereby setting the angle of rotation of the rotary valve.

As means for transmitting rotation of the motor rotation shaft which is located outside the casing to the reduction gear mechanism and rotary valve which are received in the tightly closed casing, a pair of permanent magnets are disposed at a gear train shaft end on the input side of the reduction gear mechanism and the motor shaft end, so that rotation of the permanent magnet (driving element) driven by the motor is transmitted to the permanent magnet (driven element) and rotation of the permanent magnet (driven element) is transmitted to the reduction gear mechanism and the rotary valve.

However, in the case where permanent magnets are disposed at both the motor rotation shaft and the input shaft end of the reduction gear mechanism placed within the tightly closed casing so that the rotation is transmitted by the magnetic force of the permanent magnets, the absorptive force of the permanent magnets incurs overly large load to the motor and as a result, the service life of the motor is reduced. In order to avoid such inconveniences, it is required to employ a large-sized motor and an expensive and complicated thrust bearing.

Moreover, the conventional devices are encountered with such inconveniences that the permanent magnet mounted on the input shaft end of the reduction gear mechanism within the tightly closed casing absorbs the iron powders before the assembly, thus resulting in troubles of the reduction gear and rotary valve.

Those inconveniences often turn out to be the cause of inferior setting of the angle of rotation of the rotary valve and thus, affect adversely the performance of the air-conditioner.

The present invention has been accomplished in view of the above situation.

### OBJECTS OF THE INVENTION

It is, therefore, an object of the present invention to provide a mechanism for actuating a rotary valve in which overly large load is not incurred to the motor.

It is another object of the present invention to provide a mechanism for actuating a rotary valve in which a stable rotation is ensured using a small motor and without using a special bearing.

It is a further object of the present invention to provide a mechanism for actuating a rotary valve in which a proper angle of the rotary valve can be set reliably.

It is a still further object of the present invention to provide a mechanism for actuating a rotary valve in which troubles attributable to absorption of iron powders during assembly, as experienced with respect to the conventional devices, can be avoided.

The foregoing has outlined some of the more pertinent objects of the present invention. These objects should be construed as being merely illustrative of some of the more prominent features and applications of the invention. Many other beneficial results can be obtained by applying the disclosed invention in a different manner or modifying the invention within the scope of the invention. Accordingly, other objects in a full understanding of the invention may be had by referring to the summary of the invention, the detailed description describing the preferred embodiment in addition to the scope of the invention defined by the claims taken in conjunction with the accompanying drawings.

### SUMMARY OF THE INVENTION

In order to achieve the above objects, according to the present invention, there is essentially provided a mechanism for actuating a rotary valve in which a motor rotation shaft makes a plurality of rotations so that the rotary valve is rotated at a required angle of rotation in accordance with the number of rotations of the motor rotation shaft, and in which the angle of rotation of the rotary valve is set to a constant speed reduction ratio through reduction of rotating speed of the motor rotation shaft by a reduction gear mechanism, wherein a driving element fabricated of a permanent magnet is disposed at one end of the motor shaft and a driven element fabricated of a magnetic body is disposed at one end of a gear train shaft on an input side of the reduction gear mechanism so that rotation of the permanent magnet (driving element) rotated by the motor is transmitted to the magnetic body by magnetic force and rotation of the magnetic body (driven element) is transmitted to both the gear reduction mechanism and the rotary valve.

The rotary valve may serve as a valve for controlling a stream of coolant in an air-conditioner.

### BRIEF DESCRIPTION OF THE DRAWINGS

Fig. 1A is a sectional view showing a general construction of an air-conditioner, and Fig. 1B is a perspective view of a fluid flow passageway switch valve fabricated of a rotary valve incorporated in the air-conditioner;
Figs. 2A, 2B and 2C show one example of a driving element and a driven element, Fig. 2A is a sectional view of the fluid flow passageway switch valve taken on line A-A of Fig. 2B, Fig. 2B is a sectional view taken on line B-B of Fig. 2A and Fig. 2C is a sectional view taken on line C-C of Fig. 2A;
Fig. 3A is a cross sectional view of the fluid flow passageway switch valve, showing a stream of coolant when the operation is in a warming mode and Fig. 3B is a vertical sectional view thereof;
Fig. 4A is a cross sectional view of the fluid flow passageway switch valve, showing a stream of coolant when the operation is in a dehumidifying operation mode and Fig. 4B is a vertical sectional view thereof;

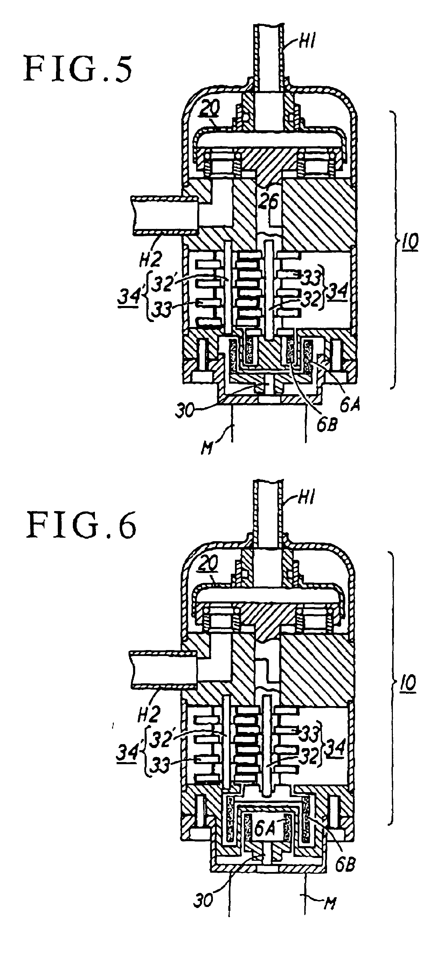

Fig. 5 is a vertical sectional view of the fluid flow passageway switch valve showing another example of the driven element and driving element; and
Fig. 6 is a vertical sectional view of the fluid flow passageway switch valve showing a further example of the driven element and driving element.

### DETAILED DESCRIPTION OF THE INVENTION

A mechanism for actuating a rotary valve according to the present invention will now be described in detailed which is, in this embodiment, applied to a fluid flow passageway switch valve for controlling a stream of coolant in an air-conditioner.

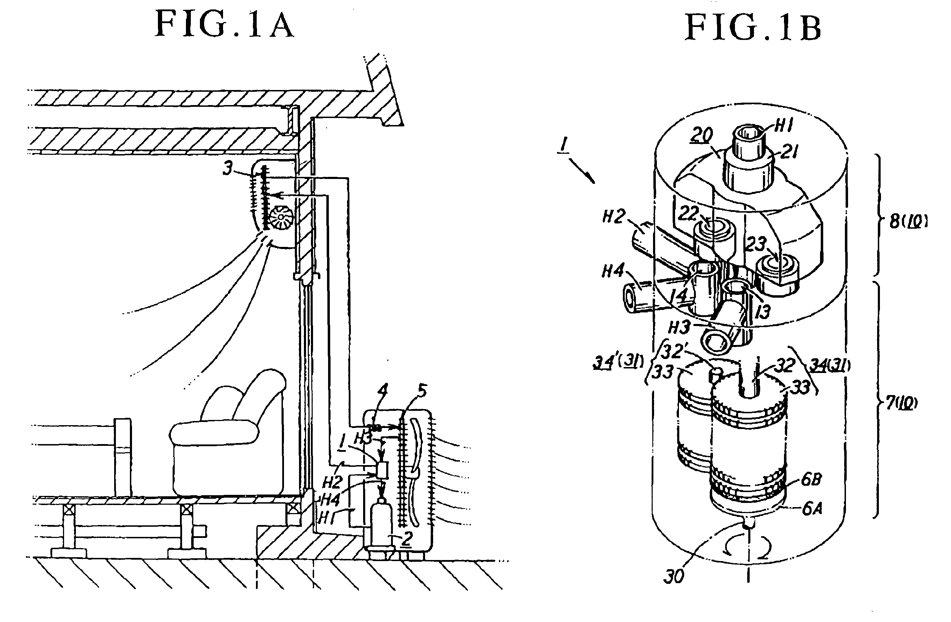

In an air-conditioner, as shown in Fig. 1, an inlet port and an outlet port of a compressor 2 are connected to a coolant fluid flow passageway switch valve 1 through a first piping H1 and a fourth piping H4, respectively.

Similarly, the coolant fluid flow passageway switch valve 1 is connected to an indoor heat exchanger 3 and an outdoor heal exchanger 5 through a second piping H2 and a third piping H3, respectively. The indoor heat exchanger 3 and the outdoor heat exchanger 5 are connected through a narrow piping 4 which has the function to reduce the pressure of the coolant.

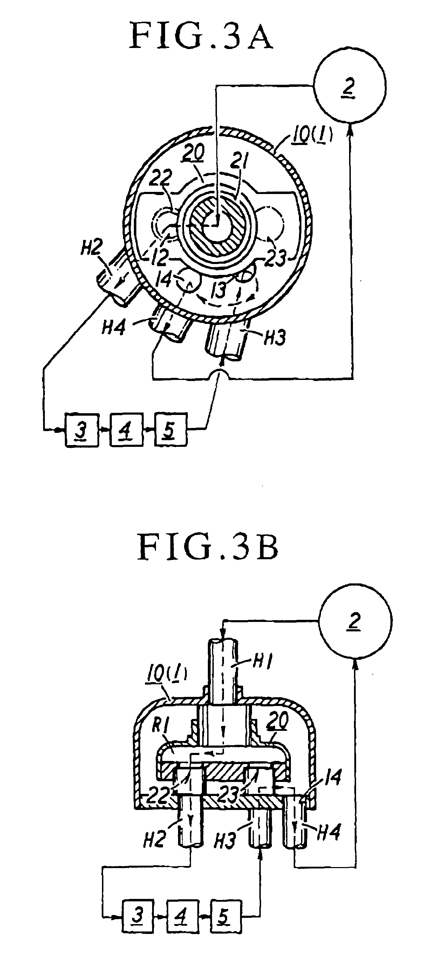

In a warming operation mode, as shown in Figs. 1 and 3, the coolant is circulating from the compressor 2 again to the compressor 2 via the coolant fluid flow passageway switch valve 1, the indoor heat exchanger 3, the narrow piping 4, the outdoor heat exchanger 5 and the coolant fluid flow passageway switch valve 1.

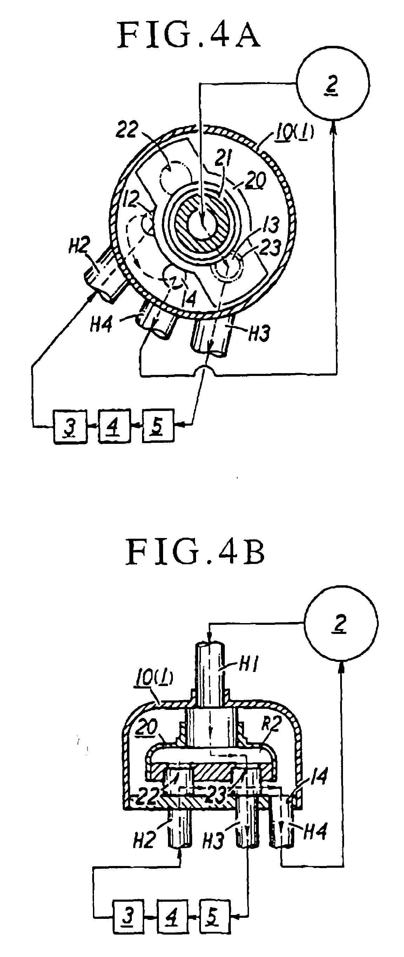

In a cooling operation mode, as shown in Fig. 4, the coolant is circulating from the compressor 2 again to the compressor 2 via the coolant fluid flow passageway switch valve 1, the outdoor heat exchanger 5, the narrow piping 4, the indoor heat exchanger 3 and the coolant fluid flow passageway switch valve 1.

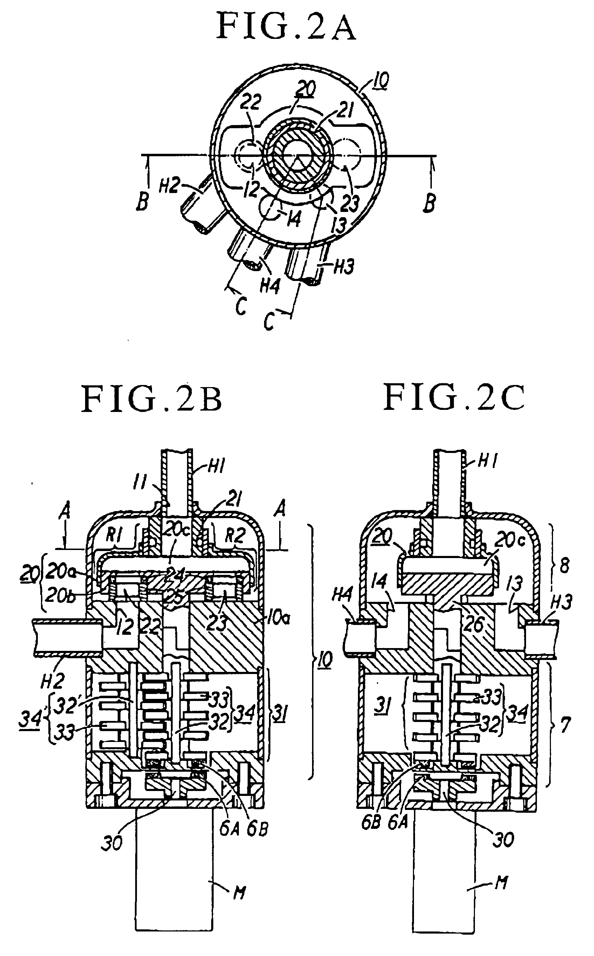

With respect to the coolant fluid flow passageway switch valve 1, in this embodiment, the inside of the casing 10 is divided into a reduction gear receiving chamber 7 and a valve receiving chamber 8 through a partition 10a as shown in Figs. 1B and 2.

The rotary valve 20 received in the valve receiving chamber 8 is reciprocally rotated a constant angle by a reduction gear mechanism 31 received in the reduction gear receiving chamber 7.

As shown in Fig. 2, the casing 10 exhibits a generally cylindrical tubular configuration. The inside of the casing 10 is maintained in an air-tightly closed condition. Accordingly, the reduction gear receiving chamber 7 and the valve receiving chamber 8 divided by the partition 10a are maintained in an air-tightly closed condition, too.

A first connection port 11 is open at the center of an upper surface of the casing 10. This first connection port 11 is connected with one end of the first piping H1 the other end of which is connected to an outlet port of the compressor 2.

The partition 10a is provided with a second connection port 12, a third connection port 13 and a fourth connection port 14. The second connection port 12 is connected to the indoor heat exchanger 3 through the second piping H2, the third connection port 13 is connected to the outdoor heat exchanger 5 through the third piping H3, and the fourth connection port 14 is connected to the inlet port of the compressor 2 through the fourth piping H4.

A rotation shaft 26 vertically extending through the center of the rotary valve 20 is pierced all the way through the center of the partition 10a, thereby rotatably supporting the rotary valve 20 on the partition 10a.

As shown in Figs, 1 and 2, the rotary valve 20 comprises a cup-like case portion 20a which is open at a bottom portion thereof and a closure plate 20b for closing the opening portion of the case portion 20a. The rotary valve 20 has a communication chamber 20c defined therein.

The communication chamber 20c is maintained in an air-tightly closed condition. A first switch port 21 is formed in the center of the case portion 20a, and a second switch port 22 and a third switch port 23 are formed in the closure plate 20b,

A fluid flow passageway, through which the first switch portion 21 is in communication with the second switch port 22, serves as a first switch passageway R1, while a fluid flow passageway, through which the first switch port 21 is in communication with the third switch port 23, serves as a second switch passageway R2. The first piping H1 is disposed at the interior of the first switch port 21.

A cylindrical sealing 25, which is coated on a surface thereof with a fluororesin or formed of a fluororesin, is fitted to the interiors of second and third switch ports 23, 24 through an O-ring 24 with an external end thereof projected. Owing to this arrangement, the sealing 25 is resiliently urged against the surface of the partition 10a by the O-ring 24 so that the leakage of the coolant is prevented.

There is a provision of a reduction gear mechanism 3, in which a motor M is used as a driver of the rotary valve 20, a motor rotation shaft 30 is caused to make a plurality of rotations by the motor M, and the rotation of the motor shaft 30 is transmitted to the rotation shaft 26 of the rotary valve 20.

As shown in Fig. 2, the reduction gear mechanism 31 is provided on an input shaft 32 and an output shaft 32' with gear trains 34 consisting of a plurality of gears 33.

The input side gear train 34 is meshed with the output side gear train 34' so that the speed is gradually reduced from the input end towards the output end, thereby enabling to finally obtain a proper speed reduction ratio, A torque caused by the motor M is given to an end portion of the input shaft 32 and the rotation shaft 26 of the rotary valve 20 is coaxially connected to an end portion of the output shaft 32', so that the rotary valve 20 is rotated a constant angle of rotation at the above-mentioned speed reduction ratio.

As means for transmitting the rotation of the motor M to the reduction gear mechanism 31, the rotation shaft 30 of the motor M is provided with a driving element 6A fabricated of a permanent magnet. The input shaft 32 of the reduction gear mechanism 31 is provided on an end portion thereof with a driven element 6B fabricated of a magnetic body such as a steel product.

The permanent magnet (driving element 6A) is rotated by the motor M and the magnetic body (driven element 6B) opposing the permanent magnet in non-contacting relation is rotated by its magnetic force. This causes the input side gear train 34 and the output side gear train 34', thereby rotating the rotary valve 20 a required angle of rotation about the rotation shaft 26 connected directly to the output shaft 32'.

The permanent magnet (driving element A) and the motor M are disposed outside the casing 10 and received in a recess formed in the casing 10. On the other hand, the magnetic body (driven element 6B) is received in the tightly closed casing 10 and disposed proximate to the inner surface of a wall which defines the recess in such a manner as to oppose the permanent magnet within the casing 10.

The direction of rotation of the rotary valve 20 is switched by switching the direction of electric current applied to the motor M. By doing so, the fluid flow passageway of the coolant is switched so that the operation mode is switched between the warming operation mode and the cooling operation mode.

For example, if the final speed reduction ratio of the reduction gear mechanism 31 is set to 1/800, the rotary valve 20 makes 1/8 rotations (i.e, 45 degrees rotation) when the driving element 6A (permanent magnet) is caused to make 100 rotations.

As the rotary valve 20 is rotated in one direction, the second switch port 22 and the second piping H2 are communicated with each other within the casing 10. Similarly, as the rotary valve 20 is rotated in the other direction, the third switch port 23 and the third piping H3 are communicated with each other. There is a provision of a stopper for setting an angle of rotation of the rotary valve 20.

In Fig. 2, the driving element (permanent magnet) 6A mounted on the motor rotation shaft 30 and the driven element (magnetic body) 6B mounted on the input shaft of the reduction gear mechanism 31 are in opposing relation on the co-axis of the motor rotation shaft 30 and the input shaft 32. That is to say, an axial end face of the permanent magnet and an axial end face of the magnetic body are in parallel opposing relation in a non-contacted fashion.

As shown in Fig. 3, the driving element (permanent magnet) 6A mounted on the motor rotation shaft 30 is in opposing relation to an outer surface of the periphery of the driven element (magnetic body) 6B. That is to say, the inner surface of the permanent magnet and the outer surface of the magnetic body are disposed in parallel opposing relation to each other in a direction perpendicular to the axis.

As shown in Fig. 4, the driven element (magnetic body) 6B mounted on the input shaft 32 of the reduction gear mechanism 31 is disposed in opposing relation to the outer surface of the periphery of the driving element (permanent magnet) 6A mounted on the motor rotation shaft 30. That is to say, the inner surface of the permanent magnet and the outer surface of the magnetic body are disposed in parallel opposing relation to each other in a direction perpendicular to the axis.

The fluid flow passageway switch valve 1 in the air-conditioner will now be described.

### (1) Warming Operation

As shown in Fig. 3, the motor rotation shaft 30 makes a required number of rotations to rotate the rotary valve 20 a required angle of rotation in one direction in accordance with the speed reduction ratio of the reduction gear mechanism 31 such that the second switch port 22 is connected to the second piping H2 but the third switch port 23 is not connected to the third piping H3.

The coolant from the compressor 2 circulates via the compressor 2, the first piping H1, the first switch passageway R1, the second piping H2, the indoor heat exchanger 3, the narrow tube 4, the outdoor heat exchanger 5, the third piping H3, the interior of the casing 10, the fourth connection port 14, the fourth piping H4 and then the compressor 2 in order. During circulation of the coolant, the warming operation is executed.

### (2) Cooling/Dehumidifying Operation

As shown in Fig. 4, the motor rotation shaft 30 is caused to make a required number of rotations to rotate the rotary valve 20 a required angle of rotation in the other direction in accordance with the speed reduction ratio of the reduction gear mechanism 31 such that the third switch port 23 is connected to the third piping H3 but the second switch port 22 is not connected to the second piping H2.

The coolant from the compressor 2 circulates via the compressor 2, the first piping H1, the second switch passageway R2, the third piping H3, the outdoor heat exchanger 5, the narrow tube 4, the indoor heat exchanger 3, the second piping H2, the interior of the casing 10, the fourth connection port 14, the fourth piping H4 and then the compressor 2 in order. During circulation of the coolant, the cooling operation is executed.

According to the present invention, stable rotation can assuredly be obtained with a small motor without incurring overly large load to the motor and a proper angle of the rotary valve can positively be set without using a special bearing.

In addition, by virtue of the features in that the driven element is fabricated of a magnetic body, iron powders are prevented from being absorbed, which would otherwise occur as in the conventional devices, during the time for assembly and therefore, the above-mentioned troubles due to absorption of the iron powders can be avoided.

Obviously, many modifications and variations of the present invention are possible in light of the above teachings. It is therefore to be understood that within the scope of the appended claims, the invention may be practiced otherwise than as specifically described herein.

## Claims

1. A mechanism for actuating a rotary valve in which a motor rotation shaft makes a plurality of rotations so that said rotary valve is rotated at a required angle of rotation in accordance with the number of rotations of said motor rotation shaft, and in which said angle of rotation of said rotary valve is set to a constant speed reduction ratio through reduction of rotating speed of said motor rotation shaft by a reduction gear mechanism, wherein a driving element fabricated of a permanent magnet is disposed at one end of said motor shaft and a driven element fabricated of a magnetic body is disposed at one end of a gear train shaft on an input side of said reduction gear mechanism so that rotation of said permanent magnet (driving element) rotated by said motor is transmitted to said magnetic body by magnetic force and rotation of said magnetic body (driven element) is transmitted to both said gear reduction mechanism and said rotary valve.

2. A mechanism for actuating a rotary valve according to claim 1, wherein said rotary valve serves as a valve for controlling a stream of coolant in an air-conditioner.
